(19) Europäisches Patentamt / European Patent Office / Office européen des brevets

(11) **EP 4 171 003 A1**

(12) **EUROPEAN PATENT APPLICATION**

(43) Date of publication:
**26.04.2023  Bulletin 2023/17**

(21) Application number: **22185891.3**

(22) Date of filing: **20.07.2022**

(51) International Patent Classification (IPC):
***H04N 1/60*** *(2006.01)*

(52) Cooperative Patent Classification (CPC):
**H04N 1/6047; H04N 1/6052**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **25.10.2021  US 202163271697 P**

(71) Applicant: **Esko Software BV**
**9051 GHENT (BE)**

(72) Inventor: **GOOSSENS, Rian**
**9051 Gent (BE)**

(74) Representative: **Müller-Boré & Partner**
**Patentanwälte PartG mbB**
**Friedenheimer Brücke 21**
**80639 München (DE)**

(54) **PHYSICAL-SAMPLE-BASED COLOR PROFILING**

(57)  A computer-implemented method for replicating printing output of a source printer having an unknown color profile. The method includes receiving a source file of ink values used by the source printer for printing a product, obtaining measured values of the product in a device-independent color space (DICS), computing a source device-to-lab (A2B) function that converts the ink values in the source file to the measured values, and using a destination lab-to-device (B2A) function to convert the DICS values to destination printer ink values. Computing the A2B function may include a) estimating a proxy color profile, b) pre-training a source neural network using ink values from the source file and proxy color values, c) finetune-training the source neural network using the ink values from the source file and the measured values, and d) converting the ink values from the source file to the measured values using the finetune-trained source neural network.

SOURCE A2B NN FLOW

FIG. 3

EP 4 171 003 A1

# Description

## TECHNICAL FIELD

The present subject matter relates to techniques and equipment to a method for physical-sample-based color profiling.

## BACKGROUND OF THE INVENTION

Color conversion is an important process for ensuring consistent color in printed product (e.g. packaging), even when different printers, operating in different color spaces, are used. Printing companies convert colors between different color spaces so that different printers can print a consistent product. If the color profile of the source printer is known, the color conversion to a destination printer profile (which is also known) is fairly straightforward.

However, sometimes the color profile of the source printer is not known. Printing companies often receive jobs (i.e. requests to print a product) from their customers as nothing more than a consolidated file (e.g. a file in Portable Document Format (PDF)) containing ink values for printing the product, and a physical sample of the printed product (i.e. the printed packaging) created by the source printer. As used herein the exemplary term PDF is used in shorthand, but should be understood as a non-limiting term that may refer to any type of consolidated file. Using only prior art technology, the printing company cannot directly convert the ink values in the PDF to the destination printer color space in a way that matches the physical sample created by the source printer, because the color conversion from the PDF ink values to the color space of the source printer is unknown. For example, as is known in the art, the PDF ink values may be expressed in an ink space that includes more or fewer inks than may have actually been used for printing. For example, PDF ink values may be expressed in a CMYKOGV ink space or CMYK+ (wherein the + is a specific spot color), but the source printer may have elected to print using fewer colors for efficiency or cost savings, particularly if the finished print could be produced within tolerance with fewer inks. Without knowing the color conversion performed by the source printer, printing companies have historically been unable to accurately perform a conversion to the destination printer color space in a way that allows the product printed by the destination printer to accurately replicate the original product printed by the source printer. Particularly in the field of consumer product packaging printing, the print customers want new print packaging printed by a second printer to replicate as close as possible the old print packaging printed by a first printer, so that the print packaging emanating from different printing sources are not materially perceptibly different when viewed side-by-side, such as, e.g., on a supermarket shelf.

## SUMMARY OF INVENTION

One aspect of the invention relates to a computer implemented method for replicating printing output of a source printer having an unknown color profile. This method comprises receiving a source file of ink values used by the source printer to print a printed product, measuring at least portions of the printed product to produce measured values of the printed product in a device-independent color space, computing a source device-to-lab (A2B) function that converts the ink values in the source file to the measured values, and using a destination lab-to-device (B2A) function to convert the values in the device-independent color space to ink values for a destination printer..

The step of computing the source device-to-lab (A2B) function that converts the ink values in the source file to the measured values, may include the steps of a) estimating a proxy color profile for the ink values, b) pretraining a source neural network using the ink values from the source file and proxy color values from the proxy color profile, c) finetune-training the source neural network using the ink values from the source file and the measured values, and d) converting the ink values from the source file to the measured values using the finetune-trained source neural network.

## BRIEF DESCRIPTION OF THE DRAWINGS

The drawing figures depict one or more implementations, by way of example only, not by way of limitations. In the figures, like reference numerals refer to the same or similar elements.

FIG. 1 is a block diagram of customer and printer company interactions when printing a printed product by a source printer and then attempting to replicate a printed product by a destination printer, according to an embodiment of the disclosure.

FIG. 2 is a flowchart of the conversion estimation with respect to the customer and printer company interactions shown in FIG. 1, according to an embodiment of the disclosure.

FIG. 3 is a flowchart of source A2B function determination for the conversion estimation in FIG. 2, according to an embodiment of the disclosure.

FIG. 4 is a flowchart of destination B2A function determination for the conversion estimation in FIG. 2, according to an embodiment of the disclosure.

FIG. 5 is a flowchart of printing based on the conversion estimation in FIG. 2, according to an embodiment of the disclosure.

FIG. 6 is a block diagram of hardware components of the various devices, according to an embodiment of the disclosure.

FIG. 7A is an exemplary image corresponding to a printed product and related source file for processing in accordance with aspects of the invention.

FIG. 7B is an exemplary arrangement of sample areas for taking colorimetric date in accordance with aspects of the invention.

FIG. 7C is an exemplary arrangement of the sample areas in FIG. 7B superimposed on the image of the printed product in FIG. 7A in accordance with aspects of the invention.

DETAILED DESCRIPTION OF THE INVENTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Reference now is made in detail to the examples illustrated in the accompanying drawings and discussed below.

INTRODUCTION

Described herein is a method for estimating an unknown color conversion performed by a source printer from PDF ink values to the color space of the source printer. This estimated color conversion may then be used by the destination printer to accurately replicate the printed product created by the source printer from the PDF ink values.

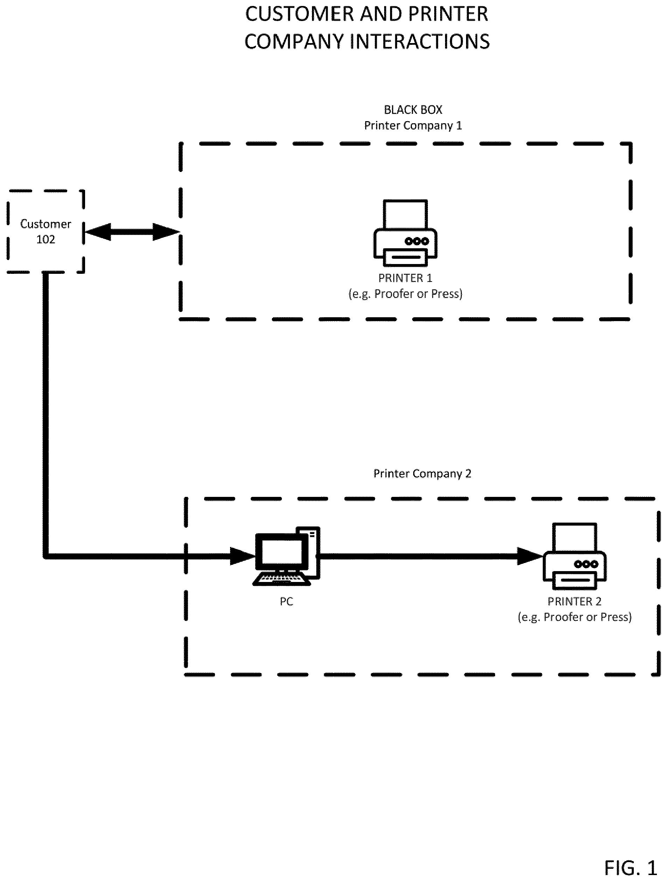

FIG. 1 is a block diagram of customer and printer company interactions when printing a printed product by a source printer and then attempting to replicate a printed product by a destination printer. For example, customer 102 originally sends a product design (e.g. PDF file containing the content to be printed, along with ink values associated with the color of the printed content) to Printer Company 1. Printer company 1 (represented as a black box) then prints the product design. However, source printer 1 has a specific color profile. This color profile is based on the ink combinations available to source printer 1, color characteristics of the substrate on which the job is to be printed, and characteristics of the printer itself, which usually requires some conversion of the PDF file ink values received from the customer. This means that source printer 1 cannot simply use the PDF file ink values to perform printing to the commands actually executed by the source printer. Thus, prior to printing, source printer 1 or a processor, such as in a personal computer (PC) (not shown) performs a conversion of the PDF file ink values based on the color profile of source printer 1. This conversion allows source printer 1 to print the product based on best-fit ink values (i.e. printer ink values closest to the PDF ink values) to create on the substrate the color as desired by the designer.

At a later time, customer 102 may send the product design (e.g. the PDF file containing ink values) to a different destination printer company 2. Frequently, this request includes the PDF file (containing the ink values) and a physical copy of the previously printed product (i.e. product previously printed by source printer company 1), but does not include details of the ink conversion performed by source printer company 1. The details of the ink conversion performed by source Printer Company 1 need to be determined or at least accurately estimated in order to accurately match the product printed received from the customer within a desired level of tolerance.

OVERALL SOLUTION

In accordance with one aspect of an embodiment of the invention, a method includes destination Printer Company 2 in FIG. 1 estimating the unknown ink conversion performed by source Printer Company 1. Specifically, the destination computer processor (e.g. utilizing downloaded or recorded software on a PC, non-downloadable software residing on a server, or a combination thereof) executes instructions that use the PDF file ink values and an image with measured color values (e.g. using a spectrometer or spectrally precise camera or scanner) of the physical sample received from customer 102. The method includes estimating what is referred to herein as a "device-to-Lab" (A2B) function that converts the ink values in the source file to device-independent color space values (e.g. values in RGB that would, for example, be used for viewing the scanned image on a display (e.g. of the PC)). The A2B function can then be combined with what is referred to herein as a "Lab-to-device" (B2A) function that converts the device-independent color space values to ink values for use by destination printer 2.

Although the term "scanned image" is used herein, this term should be understood to refer to the image containing measured values, regardless of technology used to obtain the measured values. Measured values are generally collected in a table of data points from the sample. These data points can be manually defined, or may be automatically defined by an algorithm.

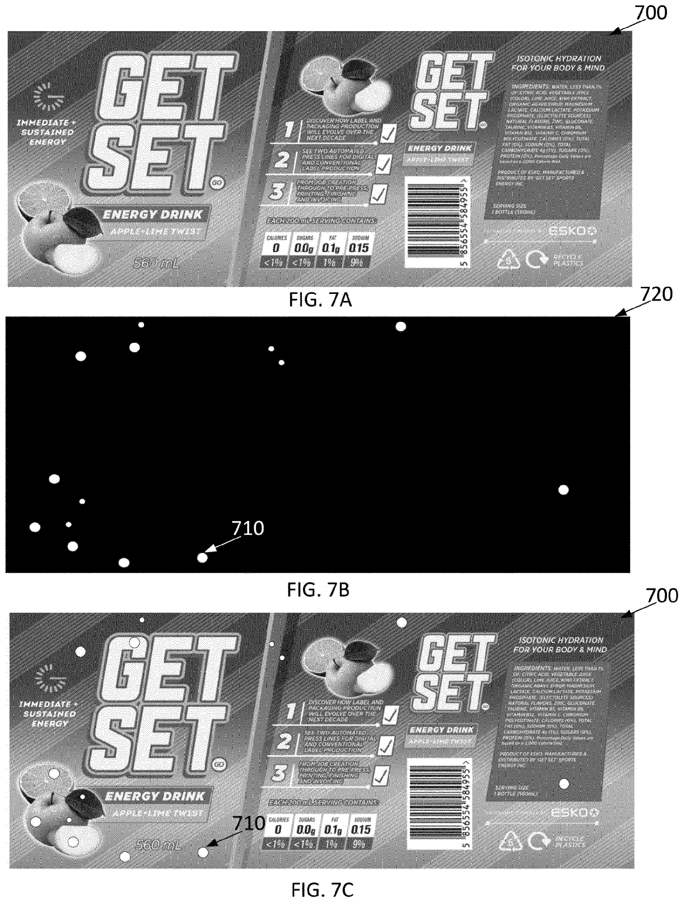

For example, referring now to the exemplary image 700 depicted in FIG. 7A, which image corresponds to the source file and the printed product for processing, an arrangement of dots of varying sizes may be manually or automatically identified at selected locations, such as in the locations of the white dots 710 depicted in mask 720 shown in FIG. 7B. The details of the sample as depicted in FIG. 7A are not shown for simplicity, and the content of any text depicted thereon is not intended to be readable or to form a part of this invention. Mask 720 may be created in a physical form in the same size as the sample, with holes in the locations of the white dots, and measurements with a colorimeter made of the sample through the holes. Or, the mask may be virtually superimposed over the source file as shown in FIG. 7C to direct manual/automatic sampling. The colorimeter readings may then be mapped to the source file ink values manually or automatically. In other embodiments, a colorimeter may be connected to a computer that also has access to the source file, with points on the sample registered in a coordinate system corresponding to a like coordinate system in the source file, and the colorimeter location tracked in real time, so that the location of the colorimeter on the sample is shown on a display of the computer and the readings taken by the colorimeter mapped to the corresponding values in the source file.

The dots identifying the colorimeter sample locations may overlap numerous source file ink values. The source file can be sampled at these points to collect the ink combinations overlapped by the dots, either as the center of the dots, or as an average of the whole dot. These specific points can either be measured on the package manually using a spectrophotometer, as described above, or scanned automatically by feeding the positions to an automatic spectrophotometer having coordinates relative to the sample registered in correspondence to like coordinates on the PDF. The spectral values measured by the colorimeter are then converted to Lab values. Rather than selecting dots, a line may also be drawn across an important region of the package by a spectrophotometer, thereby collecting many different points along the line through an identified important region aligned with the data from the job.

Locations for colorimetric measurements of the sample may be selected by any number of factors, preferably strategically based upon the ink values in the source file, such as selecting colors most frequently utilized, colors corresponding to single ink values, colors corresponding to minima and/or maxima for one or more of the ink colors, critical design colors (e.g. brand colors or spot colors), solid rendering colors, and the like, without limitation. For example, with respect to the minima and/or maxima, the solid color of the ink may be set as a maximum, and the color of the printing substrate may be set as a minimum, thereby providing a minima that is common for every color.

Other image capturing devices can also be used to capture measured values of the sample. For example, if sRGB is an adequate intermediate space, rather than using a spectrophotometer, the system may simply use scanner or camera to capture an image of the package. The system then aligns this image with a render of the job using techniques such as SIFT, ORB or SURF, and then records the values of identified pixels, each of which includes a pair of ink values (the input space) and an RGB value (the intermediate space). In this technique, RGB values may be averaged if their corresponding ink values are the same. Alternatively, if a full spectral scanner is available with acceptable spectral quality, Lab information may be directly determined by scanning the sample using such a scanner.

As the captured dataset may be limited, it may be useful to enhance the dataset. Because the job typically has ink names recorded in the PDF, these ink names may be queried from a database of spectral data. Alternatively inks with spectral data may be queried by finding the closest matching ink to an RGB equivalent embedded in the job. Alternatively, some inks may be identified as process inks, and a standardized profile (e.g. isocoated) may also be loaded into the system. These full spectral inks and/or profiles may be fed to an ink model (a function that makes an approximation to an overprint of inks) to make an artificial dataset. This artificial dataset may then be combined with the real dataset. An example of this process may be that for every ink in the input space: if the closest point in the dataset to a solid of that ink has a distance (e.g. Euclidean distance) larger than a predetermined threshold, the system adds the solid from the artificial dataset. Another example may be for every combination of inks that occur in the job, and for every point according to a chosen sampling technique: if the closest point in the dataset to this sampled point is larger than a predetermined threshold, the solid from the artificial dataset is added. Artificial points may be identified so that any algorithm producing the A2B can take into account that some points are more accurate than others.

As used herein with reference to exemplary embodiments, the term "Lab" refers to the CIELAB color space, also referred to as L*a*b*, which is a color space defined by the International Commission on Illumination, and which expresses color as three values: L* for perceptual lightness, and a* and b* corresponding to red, green, blue, and yellow. As is understood to those in the art, the CIELAB color space is a device-independent, "standard observer" model derived from averaging results of color matching experiments under laboratory conditions. The invention is not limited to the use of an L*a*b* color space, however, and is applicable to the use of any standardized device-independent color space that may be known in the art now or in the future, such as but not limited to L*a*b*, RGB, sRGB, and the like, without limitation. Thus, the use herein of the shortened, generic form "Lab" in discussion of the exemplary embodiment is not intended as a limitation to any specific device-independent color space, but merely as an example. As used herein, the term "PC" may be used generally to refer to specific embodiments, but it should be understood that the invention is not limited to any specific type of computer system, and may include systems that use software executed by server computers residing "in the cloud" in communication with mobile devices (such as phones or tablets), laptops, or desk computers, or software recorded and executed within a local (e.g. desk, laptop, or local network server) computer system.

More specifically, the PDF ink values and measured image values are used to train an A2B neural network (NN) to estimate the source A2B function. In one example, the destination B2A function may already be a known function (i.e. a known conversion from a color space of a display or proofer associated with the destination printer to the color space of the destination printer). In another example, however, the destination B2A function may also be estimated using a B2A NN. More specifically, Lab values are input to the B2A NN. The ink value predictions output by the B2A are then input to the known destination A2B function. The Lab values output by the destination A2B function should match the Lab values originally input to B2A NN if the B2A function is accurately estimated.

Regardless of whether Printer Company 2 uses a known B2A function or an NN-estimated B2A function, the result is that the Lab values output by the source A2B function are then input to the B2A function to convert the Lab values to the ink values for printing by destination printer 2. The combination of source A2B + destination B2A conversions therefore accurately estimate the conversion of the PDF file ink values performed by source printer company 1, thereby resulting in a printed product that accurately replicates the printed product received from the customer.

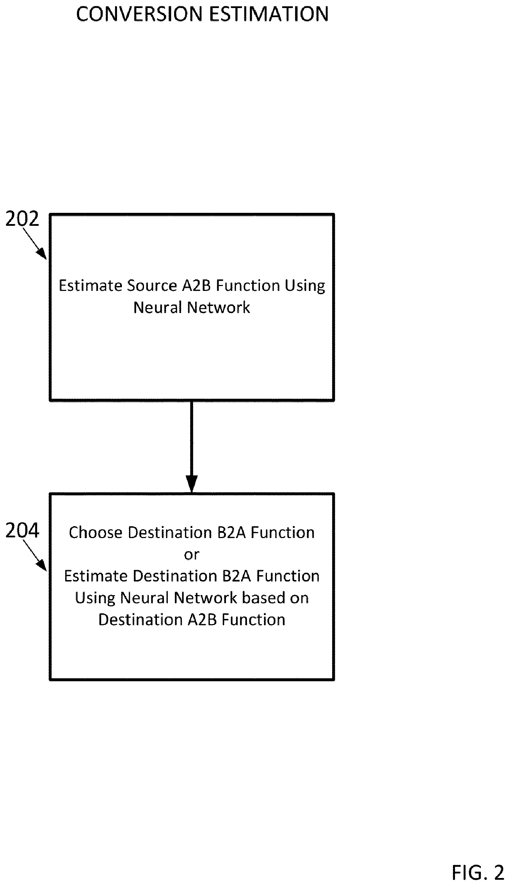

FIG. 2 is a flowchart of the overall conversion estimation process. The overall conversion estimation process includes two main steps. The first step 202 is the estimation of the A2B function. The second step 204 is the selection or estimating the B2A function.

In step 202, the following steps are taken to estimate the source A2B function. In step 202, the PC finds a proxy color profile that is appropriate for the PDF ink values. Specifically, the PC analyzes the ink values in the PDF to estimate best fit proxy for the color profile. For example, the ink values may suggest a color profile in a standard CMYK ink space would be acceptable, or may suggest that more or fewer inks (including spot colors) may be optimal. Thus, the selection of proxy color profile may also include selecting the ink space. Selection of the proxy color profile may be performed by selecting a logical profile based on the number of process colors referenced in the PDF, and selecting the correct colors (e.g. Pantone matching). However, if a logical profile cannot be found (e.g. Pantone Matching cannot be performed), then the PC may use Lab or RGB equivalents (or another device-independent color space) as the proxy color profile. Overprints in the PDF may also be calculated using an overprint model, which may help in deciphering the ink values and determining the best fit proxy ink space. The selection of proxy color profile may also consider information about the physical sample, including the measured values, measured or known information relating to the background substrate color or materials (e.g. recognizable use of a white underprint, known sourcing for the substrate materials, measured substrate color values from a non-printed region), or measured values suggesting a gamut achieved by the unknown source printer as compared to the specified ink values in the PDF that is, for example, consistent with use of only a standard (e.g. CMYK) ink space, or only achievable using a non-standard ink space (e.g. CMYKOGV).

Once the proxy color profile is chosen, the PC pre-trains the source A2B NN. Specifically, the PC inputs the PDF ink values to the source A2B NN and compares predicted Lab values to known Lab values associated with the chosen proxy ink space. If the source A2B function is accurate, then the Lab values output by the source A2B function should match the known Lab values of the proxy. If not, adjustments to the source A2B NN are made until matching occurs (e.g. delta-E between calculated color value and measured color value is within a predetermined tolerance). In one example, the delta-E utilized may be the average delta-E across the training set (e.g. a combination of real and estimated color values). In another example, the delta-E utilized may be delta-E in critical areas or most used color combinations. When matching occurs, the source A2B function is accurately estimated. This process is repeated until the A2B NN is pre-trained to accurately perform A2B conversion of proxy values.

Once the NN is pre-trained, the PC then fine-tune trains the source A2B NN. Specifically, the PC extracts important portions of the measured values (e.g. measured by a spectrometer, not shown) of the physical sample and records their positions in the PDF. These important portions may be determined manually by the technician or via some algorithm such as choosing areas with common colors for further analysis. For example, important portions may be selected as portions with commonly used color combinations. Once the important portions are selected, a technician may provide measured color coordinates for those portions, such as by using a spectrometer to provide actual color measurements in the physical sample for the selected portions in the independent color space under repeatable controlled conditions. The PC then creates a table mapping the locations of the lab values of these measured portions to corresponding locations of known ink values in the PDF. The PC then inputs the PDF ink values to the pre-trained source A2B NN and compares predicted Lab values to known lab values for the proxy and the known lab values of these measured portions. In other words, lab values of measured portions are substituted for some of the known lab values for the proxy during the learning process. The PC repeats this process until source A2B NN is fine-tuned to accurately perform source A2B conversion to proxy values that match the proxy values corresponding to the measured values. Once trained, the source A2B function can accurately estimate Lab values from the PDF ink values. Generally, the A2B function indicates how the image printed with a combination of identified ink colors (process and/or spot) are expected to appear when printed. The system may sample a profile (e.g. CMYK, CMYKOGV, etc.) and corresponding ink definitions to produce a color strategy, combining input profile, input inks, output profile, and any settings the user desires (e.g. black generation).

As an alternative to creating the source A2B function using a NN, the source A2B function may be created using a trainable theoretical overprint model. For example, in such a model, each ink may store a number of weights with weight value ranges that are preserved through a transformation (e.g. tanh) and a rescaling. For example, the weight values may correspond to a plurality of wavelength responses. For example, the weight values may be represented as a fraction of photons reflected for each wavelength (e.g. 36 wavelength responses in [0, 1] space, wherein 1 is total reflection, and 0 is no reflection), multiplied by a plurality of weighting curve parameters, one for each wavelength (e.g. 36 weighting curve parameters in [0.5, 2] space, wherein weightings of 0.5-2X for each wavelength represent a range that is intuitively practical). If the values in the weights are stored manually, the method reverses the rescaling first. The model may also include a plurality of wavelength responses (e.g. 36) for the substrate. The model preloads these wavelength responses with existing ink and substrate definitions. An exemplary model may calculate Lab values from ink values as follows:

- percentages = inputs ^ curve parameters*, where the inputs are the inputs to the neural network representing the amount of ink specified;

- $$tints = (solids / substrate) \char`\^ percentages;$$

- spectrum = product of all tints and the substrate; and

- Lab = default conversion from the spectrum under a selected illuminant (e.g. a characterized light source).

\* This gives a different percentage per ink corresponding to each wavelength.

The system preloads the model using a spectral dataset queried from a database. For example, the spectral dataset may be obtained from a Pantone Solid Coated book, such as solid spectra values provided by the Pantone Solid Coated book. In another example, the spectral dataset may be obtained from a custom ink book, or may be queried from a print profile. The entire model is differentiable, so the system can optimize all weights using backprop and a gradient descent optimizer, (e.g. the Adaptive Movement Estimation algorithm, aka "Adam") to match the dataset.

In step 204, the following steps are taken to choose/estimate the destination B2A function. When choosing a destination B2A function, technician or an algorithm takes into account the color profile of destination printer 2 and other factors. The goal being to choose a destination B2A function that enables destination printer 2 to reproduce an accurate replica of the printed product.

However, a more accurate destination B2A function may be estimated by training a destination B2A NN. During training, the PC inputs Lab values to the destination B2A NN which then predicts ink values. These predicted ink values are then input to known destination A2B function which converts the predicted ink values back to Lab values. The PC then compares Lab values output by the destination A2B function with the original Lab values input to the destination B2A NN. If the destination B2A function is accurate, then the Lab values output by the destination A2B function should match the original Lab values input to the destination B2A NN. If not, adjustments to the destination B2A NN are made until matching occurs. When matching occurs, the destination B2A function is accurately estimated. Other steps may be utilized to simplify the destination B2A NN. For example, ordinates may be restricted between 0-1, and the PC may also stop impermissible color combinations (e.g. combinations of opposite colors, such as cyan and orange, and/or unmeasured combinations, such as orange and green).

Once the source A2B function and destination B2A function are determined, they may be combined by the PC into a single color profile function for converting the PDF ink values to the destination printer ink values, or the A2B and B2A functions may be sequentially applied. This complete model effectively replicates the unknown conversion performed by source printer 1 so that the product printed by destination printer 2 matches, within a predetermined tolerance, the product printed by source printer 1.

## SOURCE A2B & DESTINATION B2A SOLUTIONS

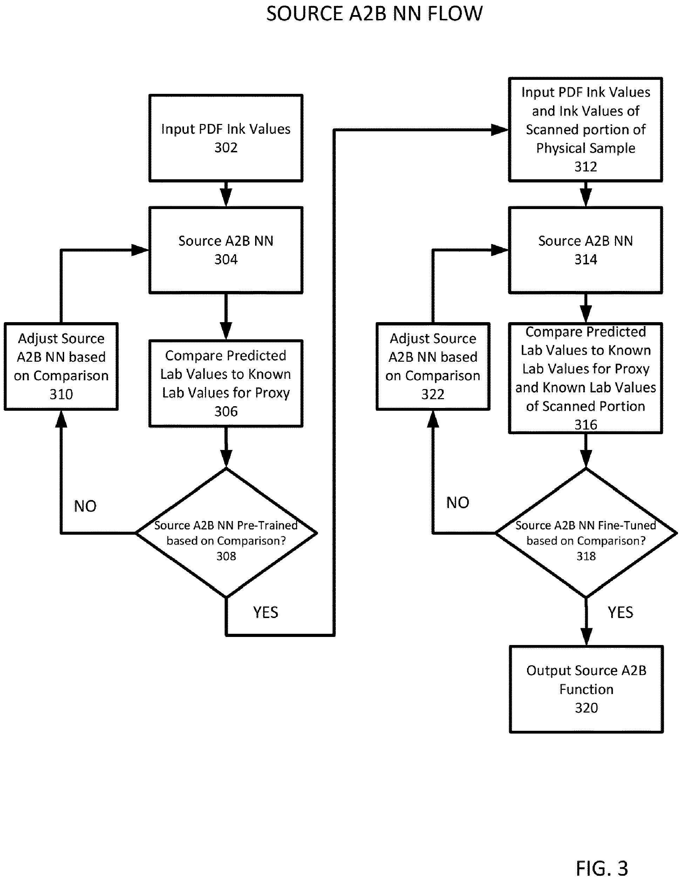

FIG. 3 is a flowchart of source A2B function determination for the conversion estimation in FIG. 2. Steps 302-308 describe the pre-training of the source A2B NN Specifically, in step 302, the PDF ink values are input to the source A2B NN and then processed by the source A2B NN in step 304. The predicted Lab values output by the source A2B NN are then compared to known Lab values for the chosen proxy.

If in step 308 it is determined that the source A2B NN is not pre-trained (e.g. predicted Lab values output by the source A2B NN do not match the known Lab values of the proxy), the method adjusts the source A2B NN in step 310 and repeats the process. If, however, in step 308 it is determined that the source A2B NN is pre-trained (e.g. predicted Lab values output by the source A2B NN match the known Lab values), the method moves on to fine-tune training steps 312-320.

Steps 312-320 describe the fine-tune training of the source A2B NN. Specifically, in step 312, the PDF ink values and ink values of measured portions of the physical sample are input to the source A2B NN and then processed by the source A2B NN in step 304. The predicted Lab values output by the source A2B NN are then compared to known Lab values for the chosen proxy and known Lab values for the measured portions. If in step 318 it is determined that the source A2B NN is not fine-tuned trained (e.g. predicted Lab values output by the source A2B NN do not match the known Lab values), the method adjusts the source A2B NN in step 322 and repeats the process. If, however, in step 318 it is determined that the source A2B NN is fine-tuned trained (e.g. predicted Lab values output by the source A2B NN match the known Lab values), the method outputs the estimated source A2B function (e.g. the trained source A2B network with its weights frozen) in step 320.

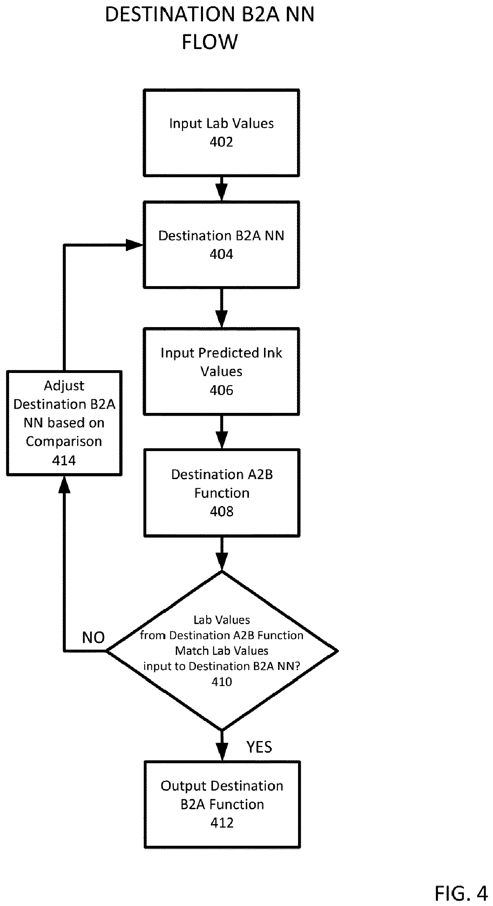

FIG. 4 is a flowchart of destination B2A function determination for the conversion estimation in FIG. 2. Steps 402-414 describe training of the destination B2A NN. Specifically, in step 402, Lab values are input to the destination B2A NN and then processed by the destination B2A NN in step 404 to produce predicted ink values. These predicted ink values output by the destination B2A NN are then input to the already known destination A2B function (e.g. an A2B function of the destination device) in step 408 which outputs predicted Lab values. The method then compares, in step 410, the Lab values originally input to the destination B2A NN for training to the predicted Lab values output by the known destination A2B function.

If in step 410, it is determined that the Lab values originally input to the destination B2A NN for training do not match the predicted Lab values output by the known destination A2B function, the destination B2A NN is not trained, and therefore the method adjusts the destination B2A NN in step 414 and repeats the process. If, however, in step 410 it is determined that the Lab values originally input to the destination B2A NN for training match the predicted Lab values output by the known destination A2B function, the destination B2A NN is properly trained and therefore the method moves outputting the destination B2A function (e.g. the trained destination B2A network with its weights frozen) in step 412.

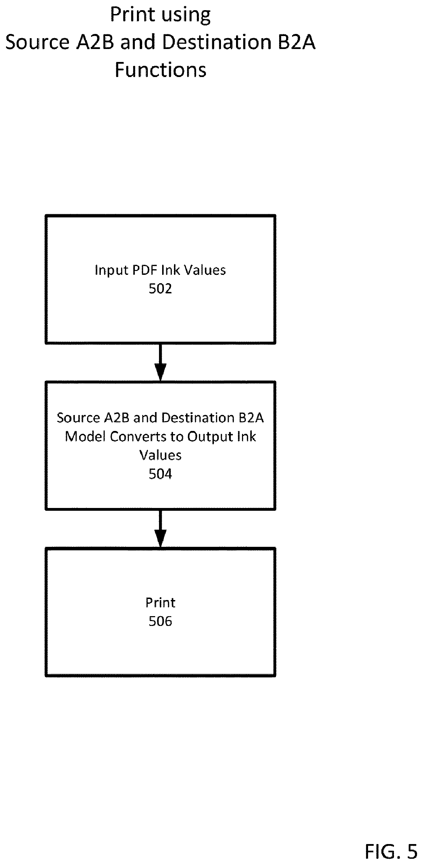

In general, once the source A2B function and the destination B2A function are estimated via their respective NN training processes, they can be combined into a single color profile function to be used by destination printer 2 to perform an accurate conversion. FIG. 5 is a flowchart of conversion and printing. In step 502, the PDF ink values are input. In step 504, the source A2B function converts the PDF ink values to Lab values to produce an image that is viewable by the technician, e.g. on a color-calibrated PC display screen or with a color proofer. This image may be used by the technician to confirm the product image or make adjustments if desired. In step 504, the destination B2A function then converts the Lab values to ink values for destination printer 2. In step 506, destination printer 2 prints a physical sample that matches the physical sample received from the customer.

## SOURCE A2B and DESTINATION B2A NEURAL NETWORKS

The source A2B and destination B2A neural networks used to estimate the source A2B and destination B2A functions do not need to have a specific structure. For example, the number of hidden layers and the chosen activation/loss functions are flexible, although more complex networks provide increased accuracy. The weights for each neuron in the NN may be initialized in various manners, including randomly, if starting a NN from scratch or deterministically based on the weights of a previously trained NN. The NN may also be a fully connected or partially connected network. The general flow is that forward propagation through the NN is performed to predict output and compare predicted output to a known value to compute loss, followed by backward propagation through the NN to adjust the neuron weights based on the computed loss, with a goal to minimize the loss. The activation functions used by the layers of the NN may be, for example, a sigmoid function, rectifier linear unit (RELU) or the like. The training data (e.g. known Lab values, known ink values, etc.) may also be subdivided into epochs, where some epochs are used for training, while other epochs are used for testing in order to perform cross-validation and ensure that overfitting has not occurred.

A number of optional modifications may be used to enhance the performance and accuracy of the NN training. In one example, giving more weight to the substrate and tints of individual inks ensures that they are the most accurate patches and also constrains the other patches to stay inside gamut (e.g. in the source A2B case). In another example, the last layer of the destination B2A network may use a sigmoid activation function or similar function to constrain the output between 0 and 100%. Yet another exemplary modification may include clipping the last layer and adding a loss function just before the clipping layer that penalizes values outside of the [0%-100%] range. While a loss function may prevent impermissible combinations in most cases, sometimes they will still occur. Therefore, a transformation layer may combine two channels that cannot occur together by putting them on the same axis (one channel becomes negative values, the other positive). A layer doing the inverse may also be built for the destination B2A network.

In another example, a database may be filled with profiles (ink charts containing device coordinates (e.g. CMYK) with corresponding Lab/XYZ/sRGB/... values, etc.) and their correspondingly trained source A2B and destination B2A networks. There may be multiple destination B2A networks for multiple types of constraints. For example, in a first step, the database is filtered for profiles containing the same inks. This may also include profiles which have more inks (e.g. CMYKOGV may be used for retraining CMYK). Exemplary profiles include CMYKO, CMYKOG, CMYKOV, CMYKOGV, without limitation. Alternatively, the database may be filtered based on printing conditions if the database of profiles becomes too large to handle otherwise. The PC may take the corresponding source A2B networks in the database and use one or more of them to convert the profile patches to the device independent color space (Lab/XYZ/sRGB/... values, etc.). A desired difference function may be used to take the average distance between the real Lab values and the predicted Lab values by the destination B2A networks. The PC takes the source A2B and destination B2A networks that produce the closest match according to the difference function. Alternatively, a different metric than average distance may be taken.

SUPPORTING HARDWARE

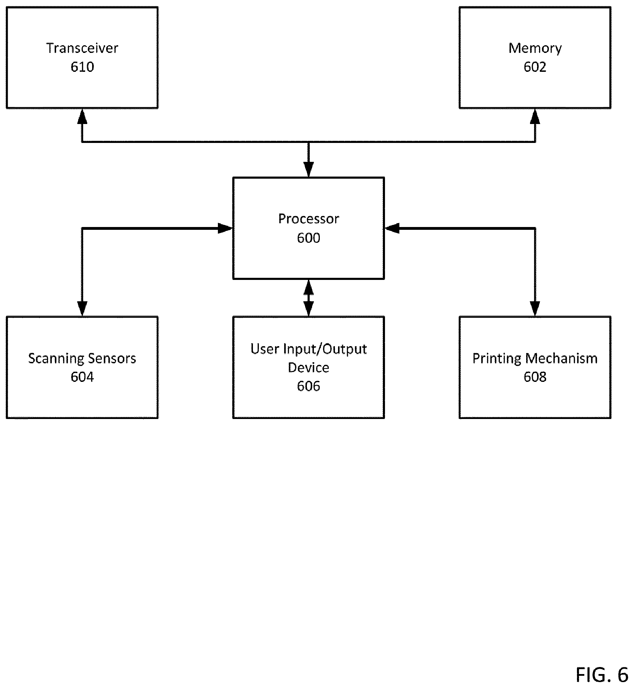

FIG. 6 is a block diagram of hardware components of the various devices. The PCs, printers and scanners described throughout the specification include at least one of the hardware components shown in FIG. 6. These hardware components include but are not limited to processor 600 (e.g. CPU) for performing the scanning algorithms, processing algorithms and printing algorithms, memory 602 for storing data and programming instructions for supporting the operation of processor 600, scanning sensors 604 (e.g. spectrometer) for scanning the physical sample, user input/output 606 (e.g. buttons, switches, display screens, etc.) for receiving instructions from the user and providing feedback to the user, printing mechanism 608 (e.g. proofer, inkjet printer, press printer, etc.) for printing the physical samples, and transceiver 610 (e.g. wired, wireless, Bluetooth, WiFi, etc.) for communication between the devices.

The instructions, programming, or application(s) may be software or firmware used to implement the device functions associated with the device such as the scanners, printers and PCs described throughout this description. Program aspects of the technology may be thought of as "products" or "articles of manufacture" typically in the form of executable code or process instructions and/or associated data that is stored on or embodied in a type of machine or processor readable medium (e.g., transitory or non-transitory), such as a memory of a computer used to download or otherwise install such programming into the source/destination PC and/or source/destination printer.

Of course, other storage devices or configurations may be added to or substituted for those in the example. Such other storage devices may be implemented using any type of storage medium having computer or processor readable instructions or programming stored therein and may include, for example, any or all of the tangible memory of the computers, processors or the like, or associated modules.

It should be understood that all of the figures as shown herein depict only certain elements of an exemplary system, and other systems and methods may also be used. Furthermore, even the exemplary systems may comprise additional components not expressly depicted or explained, as will be understood by those of skill in the art. Accordingly, some embodiments may include additional elements not depicted in the figures or discussed herein and/or may omit elements depicted and/or discussed that are not essential for that embodiment. In still other embodiments, elements with similar function may substitute for elements depicted and discussed herein.

Any of the steps or functionality of the system and method for converting graphic files for printing can be embodied in programming or one more applications as described previously. According to some embodiments, "function," "functions," "application," "applications," "instruction," "instructions," or "programming" are program(s) that execute functions defined in the programs. Various programming languages may be employed to create one or more of the applications, structured in a variety of manners, such as object-oriented programming languages (e.g., Objective-C, Java, or C++), procedural programming languages (e.g., C or assembly language), or firmware. In a specific example, a third party application (e.g., an application developed using the ANDROID™ or IOS™ software development kit (SDK) by an entity other than the vendor of the particular platform) may be mobile software running on a mobile operating system such as IOS™, ANDROID™, WINDOWS® Phone, or another mobile operating systems. In this example, the third party application can invoke API calls provided by the operating system to facilitate functionality described herein.

Hence, a machine-readable medium may take many forms of tangible storage medium. Non-volatile storage media include, for example, optical or magnetic disks, such as any of the storage devices in any computer(s) or the like, such as may be used to implement the client device, media gateway, transcoder, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," "includes," "including," or any other variation thereof, are intended to cover a non-exclusive inclusion, such that a process, method, article, or apparatus that has, comprises or includes a list of elements or steps does not include only those elements or steps but may include other elements or steps not expressly listed or inherent to such process, method, article, or apparatus. An element preceded by "a" or "an" does not, without further constraints, preclude the existence of additional identical elements in the process, method, article, or apparatus that comprises the element.

Unless otherwise stated, any and all measurements, values, ratings, positions, magnitudes, sizes, and other specifications that are set forth in this specification, including in the claims that follow, are approximate, not exact. Such amounts are intended to have a reasonable range that is consistent with the functions to which they relate and with what is customary in the art to which they pertain. For example, unless expressly stated otherwise, a parameter value or the like, whether or not qualified by a term of degree (e.g. approximate, substantially or about), may vary by as much as ± 10% from the recited amount.

In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, the subject matter to be protected may lie in less than all features of any single disclosed example. Hence, the following claims are hereby incorporated into the Detailed Description, with each claim standing on its own as a separately claimed subject matter.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the true scope of the present concepts.

**Claims**

1.  A computer-implemented method for replicating printing output of a source printer having an unknown color profile, the method comprising:

    receiving a source file of ink values used by the source printer to print a printed product;
    measuring at least portions of the printed product to produce measured values of the printed product in a device-independent color space;
    computing a source device-to-lab (A2B) function that converts the ink values in the source file to the measured values, and
    using a destination lab-to-device (B2A) function to convert the values in the device-independent color space to ink values for a destination printer.

2.  The computer-implemented method of claim 1, comprising generating the A2B function using a neural network.

3.  The computer-implemented method of claim 2, wherein the step of computing the source device-to-lab (A2B) function that converts the ink values in the source file to the measured values, includes the steps of:

    a) estimating a proxy color profile for the ink values,
    b) pre-training a source neural network using the ink values from the source file and proxy color values from the proxy color profile,
    c) finetune-training the source neural network using the ink values from the source file and the measured values, and
    d) converting the ink values from the source file to the measured values using the finetune-trained source neural network.

4.  The computer-implemented method of claim 3, further comprising:
    estimating the proxy color profile by converting the ink values in the source file to the device-independent color space.

5.  The computer-implemented method of claim 3 or claim 4, further comprising:
pre-training the source neural network by:

inputting the ink values from the source file to the source neural network,
comparing an estimated output of the source neural network to the proxy color values from the proxy color profile, and
adjusting the source A2B neural network based on the comparison.

6. The computer-implemented method of any one of claims 3-5, further comprising:
finetune-training the source neural network by:

inputting the ink values from the source file to the source neural network,
comparing an estimated output of the source neural network to the measured values, and
adjusting the source A2B neural network based on the comparison.

7. The computer-implemented method of any one of claims 1-6, wherein the destination (B2A) function is predetermined based on a known destination printer profile.

8. The computer-implemented method of any one of claims 1-6, further comprising:
estimating the destination (B2A) function by training a destination B2A neural network using device-independent color space values and a predetermined destination A2B function by:

estimating ink values based on device-independent color space values input to the destination B2A network,
inputting the estimated ink values to the predetermined destination A2B function which outputs device-independent color space values,
comparing the device-independent color space values output by the predetermined destination A2B function with the device-independent color space values input to the destination B2A network, and
adjusting the destination B2A neural network based on the comparison.

9. The computer-implemented method of claim 1, comprising generating the A2B function using a trainable theoretical overprint model.

10. The computer-implemented method of claim 9, wherein the trainable theoretical overprint model defining a plurality of inks having a plurality of weight values with weight value ranges, the weight values corresponding to a plurality of wavelength responses and a plurality of curve parameters, one for each wavelength.

11. The computer-implemented method of claim 10, wherein the Lab values are calculated from ink values in accordance with the following:

• percentages = inputs ^ curve parameters;
• tints = (solids / substrate) ^ percentages;
• spectrum = product of all tints and the substrate; and
• Lab = default conversion from the spectrum under a selected illuminant.

12. The computer-implemented method of any one of the foregoing claims, wherein the device-independent color space is L*a*b*, RGB, or sRGB.

13. The computer-implemented method of any one of the foregoing claims, wherein the source file comprises a PDF.

14. The computer-implemented method of any one of the foregoing claims, wherein measuring the portions of the printed product comprises measuring selected locations at selected coordinates on the printed product with a colorimeter.

15. The computer-implemented method of claim 14, wherein the selected locations define scattered points or groups of points, or a line across the printed product or wherein the selected locations are based upon ink values in the source file.

# CUSTOMER AND PRINTER
# COMPANY INTERACTIONS

BLACK BOX
Printer Company 1

Customer
102

PRINTER 1
(e.g. Proofer or Press)

Printer Company 2

PC

PRINTER 2
(e.g. Proofer or Press)

FIG. 1

# CONVERSION ESTIMATION

202 → **Estimate Source A2B Function Using Neural Network**

204 → **Choose Destination B2A Function
or
Estimate Destination B2A Function
Using Neural Network based on
Destination A2B Function**

FIG. 2

# SOURCE A2B NN FLOW

Input PDF Ink Values
302

Source A2B NN
304

Compare Predicted
Lab Values to Known
Lab Values for Proxy
306

Source A2B NN Pre-Trained
based on Comparison?
308

Adjust Source
A2B NN based
on Comparison
310

NO

YES

Input PDF Ink Values
and Ink Values of
Scanned portion of
Physical Sample
312

Source A2B NN
314

Compare Predicted
Lab Values to Known
Lab Values for Proxy
and Known Lab Values
of Scanned Portion
316

Source A2B NN Fine-Tuned
based on Comparison?
318

Adjust Source
A2B NN based
on Comparison
322

NO

YES

Output Source A2B
Function
320

FIG. 3

# DESTINATION B2A NN
# FLOW

Input Lab Values
402

↓

Destination B2A NN
404

↓

Input Predicted Ink
Values
406

↓

Destination A2B
Function
408

↓

Lab Values
from Destination A2B Function
Match Lab Values
input to Destination B2A NN?
410

NO →

Adjust
Destination B2A
NN based on
Comparison
414

YES ↓

Output Destination
B2A Function
412

FIG. 4

# Print using
# Source A2B and Destination B2A
# Functions

Input PDF Ink Values
502

Source A2B and Destination B2A
Model Converts to Output Ink
Values
504

Print
506

FIG. 5

Transceiver
610

Memory
602

Processor
600

Scanning Sensors
604

User Input/Output
Device
606

Printing Mechanism
608

FIG. 6

700

FIG. 7A

720

710

FIG. 7B

700

710

FIG. 7C

Europäisches
Patentamt

European
Patent Office

Office européen
des brevets

# EUROPEAN SEARCH REPORT

Application Number

EP 22 18 5891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/184658 A1 (INOUE YUUKI [JP]) 23 September 2004 (2004-09-23) * abstract * * figures 1-9 * * paragraphs [0001] - [0019], [0062] - [0074] * | 1-15 | INV. H04N1/60 |
| A | ASTON ZHANG ET AL: "Dive into Deep Learning", ARXIV.ORG, CORNELL UNIVERSITY LIBRARY, 201 OLIN LIBRARY CORNELL UNIVERSITY ITHACA, NY 14853, 21 June 2021 (2021-06-21), XP091005704, * page 576 - page 582 * | 1-15 | |
| A | US 2008/111998 A1 (EDGE CHRISTOPHER J [US]) 15 May 2008 (2008-05-15) * abstract * * figures 1-6 * * paragraphs [0001] - [0032], [0146] * | 1-15 | |

-/--

**TECHNICAL FIELDS SEARCHED (IPC)**

H04N

The present search report has been drawn up for all claims

| Place of search | Date of completion of the search | Examiner |
|---|---|---|
| The Hague | 20 November 2022 | Visser, Michelle L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Europäisches Patentamt European Patent Office Office européen des brevets | **EUROPEAN SEARCH REPORT** | **Application Number**<br>**EP 22 18 5891** |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHAO LEI: "Study on Printer Characterization Based on BP Neural Network", PROCEEDINGS OF THE 2015 INTERNATIONAL CONFERENCE ON INDUSTRIAL TECHNOLOGY AND MANAGEMENT SCIENCE, 1 November 2015 (2015-11-01), pages 1693-1696, XP055982657, Paris, France DOI: https://doi.org/10.2991/itms-15.2015.412 ISBN: 978-94-625-2123-0 Retrieved from the Internet: URL:https://www.semanticscholar.org/paper/ Study-on-Printer-Characterization-Based-on -BP-Zhao/02e15f7f7f5de8ee8a299ee4ba5abfc99 76677ef> [retrieved on 2022-11-18] * the whole document * ----- | 1-15 | |
| A | US 2021/133522 A1 (CHANG MICHAEL M [US] ET AL) 6 May 2021 (2021-05-06) * abstract * * figures 1-5 * * paragraphs [0001] - [0073] * ----- | 1-15 | **TECHNICAL FIELDS SEARCHED (IPC)** |

The present search report has been drawn up for all claims

| Place of search | Date of completion of the search | Examiner |
|---|---|---|
| The Hague | 20 November 2022 | Visser, Michelle L. |

EPO FORM 1503 03.82 (P04C01)

## ANNEX TO THE EUROPEAN SEARCH REPORT
## ON EUROPEAN PATENT APPLICATION NO.

EP 22 18 5891

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2022

| Patent document cited in search report | | Publication date | Patent family member(s) | | Publication date |
|---|---|---|---|---|---|
| US 2004184658 | A1 | 23-09-2004 | EP 1460831 A2 | | 22-09-2004 |
| | | | JP 2004304773 A | | 28-10-2004 |
| | | | US 2004184658 A1 | | 23-09-2004 |
| US 2008111998 | A1 | 15-05-2008 | EP 2082568 A1 | | 29-07-2009 |
| | | | JP 2010509886 A | | 25-03-2010 |
| | | | US 2008111998 A1 | | 15-05-2008 |
| | | | WO 2008060403 A1 | | 22-05-2008 |
| US 2021133522 | A1 | 06-05-2021 | NONE | | |

EPO FORM P0459

For more details about this annex : see Official Journal of the European Patent Office, No. 12/82